# EUROPEAN PATENT SPECIFICATION

(11) **EP 3 304 137 B1**
(45) Date of publication and mention of the grant of the patent: **22.04.2026**
(21) Application number: 15892803.6
(22) Date of filing: 28.05.2015
(51) Int. Cl.: G01V 8/20, A47B 53/00, G01B 11/14, A47B 53/02

(54) **ELECTRICALLY DRIVEN SHELVING SYSTEM WITH A SCANNING ARRANGEMENT**
ELEKTRISCH ANGETRIEBENES REGALSYSTEM MIT EINER ABTASTVORRICHTUNG
SYSTÈME DE RAYONNAGE À ENTRAÎNEMENT ÉLECTRIQUE COMPORTANT UN DISPOSITIF DE BALAYAGE

(43) Date of publication of application: 11.04.2018
(73) Proprietor: Glidestore Freetrack Pty Ltd, Eastwood, South Australia 5063 (AU)
(72) Inventor: PARKER, Brian Maurice, Eastwood, South Australia 5063 (AU); CAMPBELL, George Giles, Eastwood, South Australia 5063 (AU)
(74) Representative: Fry, David John
(86) International application number: PCT/AU2015/000318
(87) International publication number: WO 2016/187642

(56) References cited:
- GB-A- 1 204 337
- US-A- 5 408 089
- US-A- 5 427 444
- US-A- 5 569 910
- US-A- 6 091 064
- US-A1- 2008 157 965
- US-A1- 2010 127 158

## Description

### FIELD OF THE INVENTION

The present invention relates to mobile shelving systems, in particular to an electrically driven shelving system with an electromagnetic curtain detector.

### BACKGROUND TO THE INVENTION

Mobile shelving systems are popular means for reducing the floor area needed for storage. Typically a series of rows of shelving bays are mounted abutting each other thus eliminating the space needed for aisle ways between the shelving bays. The shelving bays are mounted on tracks so that when access is required to a particular shelving bay the shelving bays can be moved along the track to open up an aisle way.

The shelving bays can be moved by hand or driven by electric motors, with electric operation being preferred, especially for large systems which may be too heavy to move manually. Conventional electric systems provide an electric motor for each row of shelving bays and consequently require a significant amount of power to be routed to each row. As each row can move along the tracks providing power is cumbersome, typically done with the aid of overhead pantographs. Such systems are complicated and expensive due to the need for multiple motors and associated drive components as well as the pantograph to route power and control signals.

The Applicant has developed an improved mobile shelving system including releasably coupleable rows to overcome this problem. This shelving system allows a selectable number of the shelving bays to be coupled in series with the driven shelving bay and driven in unison along the track to open up an aisle for access to a desired shelving bay, or to close an aisle. This avoids the need to have a drive motor on each row as well as the associated power distribution infrastructure, which saves time and effort by the user.

However with electrically driven shelving systems there is the danger of the aisles being blocked by either an object or person within a system. For example, if a user is in an open aisle a second user may wish to access a location in a different aisle and accordingly instruct the system to move the bays to allow access to the location. Because the system is electronic, the second user may not be aware that the first user is within the system, and there is the risk of injury to the first user when the bays move.

Alternatively there may be an object which has fallen from the shelves of a bay into the open aisle unbeknownst to the user. Therefore, when the user instructs the system to move the bays, this object may be crushed between the moving bays causing damage to the object and potentially the system.

Therefore, it is the responsibility of a user to first check the open aisle to make sure there are no obstructions; however this is vulnerable to human error and carelessness. In the case of a large shelving system, this can be time consuming. The use of kick plates and pressure sensitive matting to eliminate this problem are known, however these methods can be expensive and unreliable. Light beam technologies have been used in other applications for object detection but to date have not been successfully adapted to mobile shelving applications due to the inherent problem of the system itself moving.

US6091064 discloses a safety system for high density mobile storage and utilizes a photoelectric transmitter that cyclically emits an intermittent beam at a predetermined frequency into an aisle adjacent a mobile carriage. Two or more transmitters can be arranged in each of one or more clusters on the carriage. The intermittent beams are directed to photoelectric receivers across the aisle. Each receiver sends a signal to reset an associated counter each time the receivers detect an intermittent beam. As long as every receiver detects at least one intermittent beam at the predetermined frequency, the mobile carriage is enabled to move. The receivers can be on the same mobile carriage as the transmitter to protect a vertical plane close and parallel to the front face of the carriage.

US5408089 discloses a storage system with movable units equipped with emitters for providing a series of radiant energy beams directed along an array of parallel paths through passages beneath the movable units. A control computer stops movement of the movable units in response to blockage of any path.

US2010/127158 discloses an optoelectronic sensor for safeguarding a hazardous area, such as a light grid, having a first and a second sensor part. The two sensor parts are arranged at a spatial distance from one another. Each sensor part has a plurality of transmitting elements for generating transmitted parallel beams and a plurality of receiving elements for receiving the transmitted beams.

US 5427444 A discloses a mobile storage systems, wherein transmitters and receivers are located on opposite adjacent shelving modules.

US2018/157965 A1 discloses an anti-intruder security system, including a plurality of light emitters and opposite light receiver, wherein every emitter is configured to send light to each receiver.

The object of the invention is to provide a mobile shelving system with a light curtain detector used to detect the presence of objects within the system, or at least provide the public with a useful alternative.

### SUMMARY OF THE INVENTION

In a first aspect the invention comprises a mobile shelving system having a scanning arrangement for a system comprising a plurality of emitters configured to emit an electromagnetic signal and a plurality of opposing detectors configured to receive the electromagnetic signal. A plurality of shelving rows including a first outer shelving row, one or more movable shelving rows, a second outer shelving row, the one or more movable shelving rows being placed between said first outer shelving row and said second outer shelving row and movable along a direction connecting said first and outer shelving row and said second outer shelving row; a microprocessor and a control module. Wherein, each shelving row of the mobile shelving system includes shelving bays elevated off the ground; one of the first and second outer shelving rows is movable and comprises a drive module configured to provide mobile force to the one shelving row; the first outer shelving row and second outer shelving row additionally include a base located under respective shelving bays; the emitters are group together in emitter modules and detectors are grouped together in opposing detector modules, each of the emitter and the detector modules being located at a respective opposing end of the system, along the base of the outer shelving row. Every emitter in an emitter module is configured to send a signal to every detector in an opposing detector module, this forming a detection curtain.

Each emitter in an emitter module is configured to be operated in sequence, whereby, the emitted electromagnetic signal is modulated to allow the signal to be distinguished from ambient signals, each detector in an opposing detector module is configured to be monitored for reception of the modulated electromagnetic signals, and wherein the microprocessor is configured to detect and obstruction through an interruption of said modulated electromagnetic signal if any one of the detectors in the opposing detector module does not receive a signal from each of the emitters in the emitter module, and wherein the control module is configured to halt the movement of the system if an obstruction is detected, and until the obstruction is removed.

Preferably multiple emitter modules and multiple detector modules may be chained together to form an extended detection curtain.

The emitters and detectors are preferably arranged orthogonally to the shelves of the mobile shelving system and the mobile shelving system is elevated off of the ground and the electromagnetic signals pass underneath the mobile shelving system. The electromagnetic signals maybe are infrared signals or visible light signals and may be modulated to allow the signals to be distinguished from ambient signals.

It should be noted that any one of the aspects mentioned above may include any of the features of any of the other aspects mentioned above and may include any of the features of any of the embodiments described below as appropriate.

### BRIEF DESCRIPTION OF THE DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows.
Figure 1 shows a perspective view of a mobile shelving system according to the present invention with a first open aisle.
Figure 2 shows the mobile shelving system of Figure 1 in a resting state with no open aisles.
Figure 3 shows the mobile shelving system of Figure 1 with a second open aisle.
Figure 4A shows a top plan view of one emitter module and one receiver module of the mobile shelving system of Figure 1 with a floor scanning system including light emitters towards the detectors.
Figure 4B shows a top plan view of one emitter module and one receiver module of the mobile shelving system of Figure 1 with a pulse train emanating from the emitters and an obstruction.
Figure 5 A shows a top plan view of one emitter module and one receiver module of the mobile shelving system of Figure 1 with an unobstructed signal from all emitters to all detectors.
Figure 5B shows a top plan view of one emitter module and one receiver module of the mobile shelving system of Figure 1 with an obstruction and a signal which has been prevented from travelling from an emitter to a detector.
Figure 6 shows a top plan view of the mobile shelving system of Figure 1 with a floor scanning system incorporating multiple emitter blocks and detector blocks.

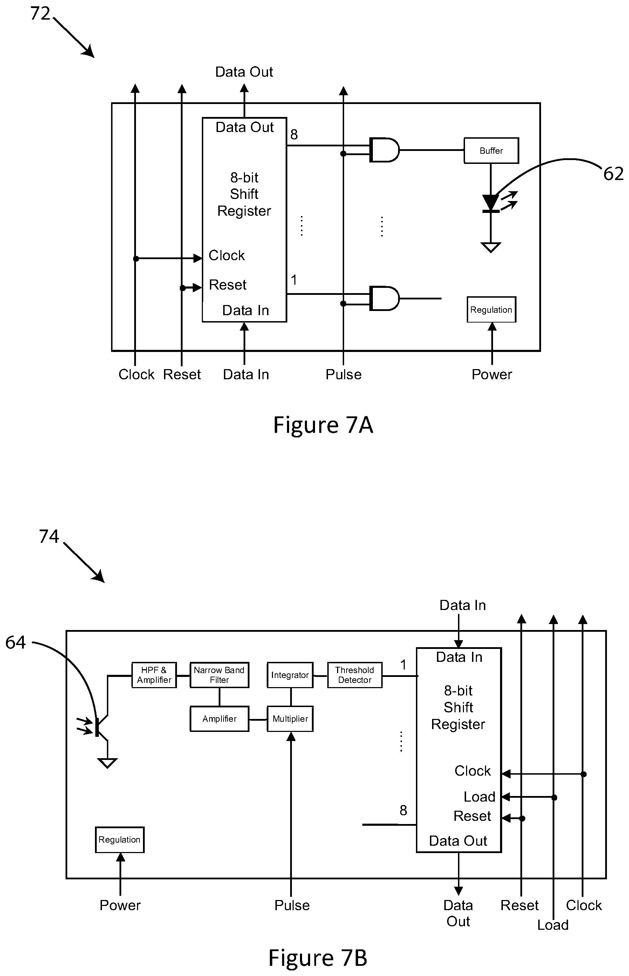

Figure 7A shows a schematic of an emitter block.
Figure 7B shows a schematic of a detector block.

### COMPONENT LISTING

The drawings include the following integers:
10 Mobile shelving bay system
20 Fixed shelving row
21, 22 Shelving bays
25 Control panel
30 First movable shelving row
31 - 34 Shelving bays
35 Access button
37 Aisle
40 Second movable shelving row
41 - 44 Shelving bays
45 Access button
47 Aisle
50 Driving shelving row
53, 54 Shelving bays
55 Access button
60 Drive module
61 Floor scanning system
62 Emitters
64 Detectors
66 Pulse train
68 Obstruction
70 Light pulses
72 Emitter block
74 Detector block
75 Microprocessor
80 Left hand latch module
90 Right hand latch module
101 , 102 Tracks DETAILED DESCRIPTION OF THE INVENTION

The following detailed description of the invention refers to the accompanying drawings. Wherever possible, the same reference numbers will be used throughout the drawings and the following description to refer to the same and like parts. Dimensions of certain parts shown in the drawings may have been modified and/or exaggerated for the purposes of clarity or illustration.

The invention provides a mobile shelving system having a floor scanning system and comprising a plurality of shelving bay rows including at least one driven shelving bay mounted on a track. Adjacent shelving bays are releasably coupleable to each other thereby allowing a selectable number of the shelving bays to be coupled in series with the driven shelving bay and driven in unison along the track to open up an aisle for access to a desired shelving bay, or to close an aisle. This avoids the need to have a drive motor on each row as well as the associated power distribution infrastructure. The floor scanning system detects people or items that may be present in an aisle way and if detected will prevent operation of the system to ensure safety.

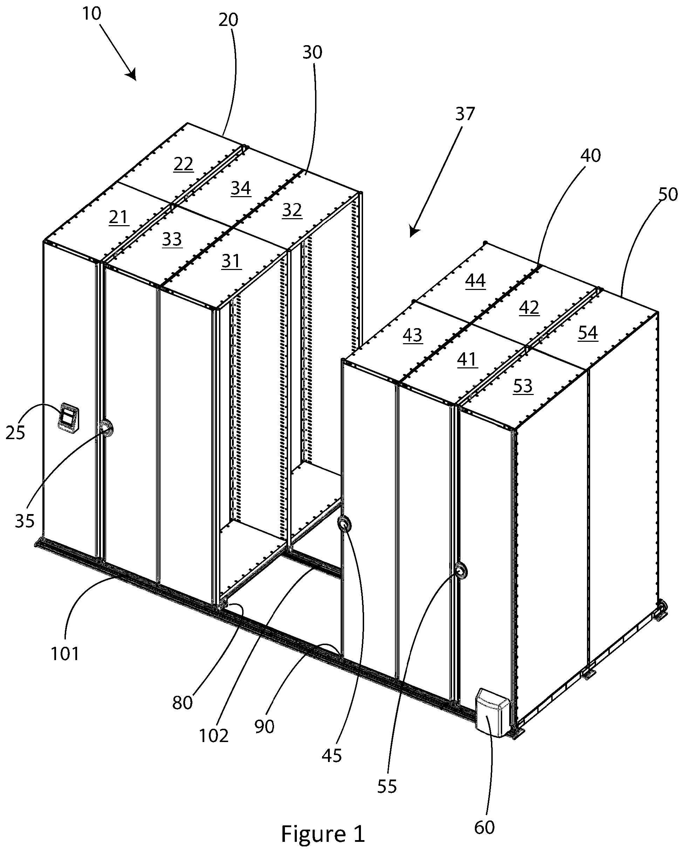

A perspective view of a mobile shelving bay system incorporating the invention is shown in Figure 1. The system comprises a series of shelving bays that span between tracks, such as bay 31 between tracks 101 and 102. Adjacent bays, both side to side and back to back, are joined to form rows. The system shown has a first fixed (i.e. non-moving) row 20 comprising bays 21 and 22, a first movable row 30 comprising bays 31, 32, 33 and 34, a second moving row 40 comprising bays 41, 42, 43 and 44 and a driving row 50 comprising bays 53 and 54. This arrangement is demonstrative, other arrangements comprising more or less rows and more or less adjacent bays are also encompassed by the invention. The floor scanning system is not visible in this figure but resides under the outer rows, i.e. bays 21, 22 and 53, 54.

To access the contents of a particular shelving bay, adjacent rows must be separated to form an aisle. In Figure 1 rows 30 and 40 are separated to form an aisle 37 to provide access to any of bays 31, 32, 43 or 44. Similarly aisles may be formed between rows 20 and 30, and rows 40 and 50.

To allow and control propulsion of the various rows the system includes a control panel 25 fitted to fixed row 20; a drive module 60 fitted to the driven row 50; a series of access buttons 35, 45 and 55 fitted to the rows adjacent to where an aisle may be desired; and also left and right hand latch modules to allow adjacent rows to be releasably coupled to each other. The latch modules can only be seen on the rows adjacent the aisle, which in Figure 1 is left hand latch module 80 on row 30 and right hand latch module 90 on row 40. The control panel may be fitted to any desired row.

The control module 25 provides a keypad, display and speaker to interact with a system administrator, displaying status messages and allowing for system resets etcetera. The control module also interfaces with access buttons, drive motor and the floor scanning system, controlling operation of the system. In particular operation of the system is halted if the floor scanning system detects the presence of an obstruction.

The latch modules 80 and 90 provide an electro-mechanical means to both releasably couple adjacent rows to each other so that they may be driven in unison or not, and electrical contacts to provide a low voltage signal and power bus between the various system elements.

The drive module 60 provides motive force to row 50 and any other rows that are coupled to it. The drive module can take many forms, with a preferred embodiment comprising a geared electric motor driving a sprocket which in turn engages a chain within the track 101. The motor is typically fitted with a current monitor and rotary encoder to facilitate a control system that can adapt the motion profile to optimise traversal times of the system independent of the load whilst maintaining safe operation as well as allowing the position of the driven row 50 to be detennined.

Access buttons 35, 45 and 55 provide a simple interface for users who press a button to initiate the opening of the adjacent aisle. The buttons comprise a small circuit board to transmit switch closure signals to the control module 25 and to illuminate a lamp in the button under command from the control module. In standby the buttons illuminate a steady green. Whilst the system is in transit the buttons turn red and act as an emergency stop button. In the case of an emergency stop, initiated by a user or the control panel, the buttons will flash red until the system is reset. The buttons may also flash orange to indicate that an obstruction has been detected.

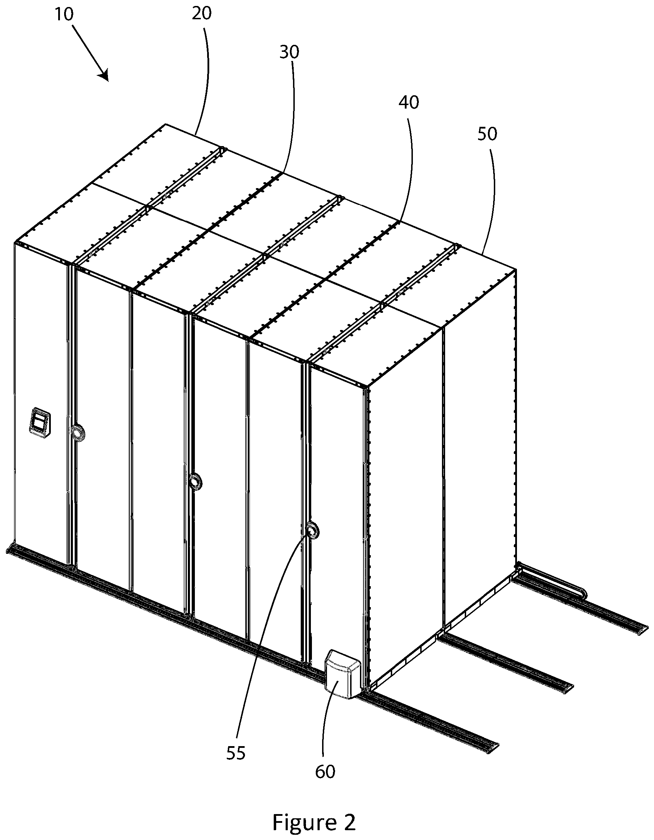

The system is shown in a typical default resting state in Figure 2 in which all rows are pushed together thus eliminating all aisles. The default resting state is chosen to minimise access times to any particular shelving bay as the system has to only open a desired aisle, instead of having to first close an undesired aisle and then open a desired aisle. Alternatively, a particular aisle can instead be chosen to be open in the resting state. Such an aisle would be chosen based on relative access frequency and can be set via the control panel. In a further embodiment the system monitors access to each aisle and sets the default open aisle to the most frequently accessed aisle.

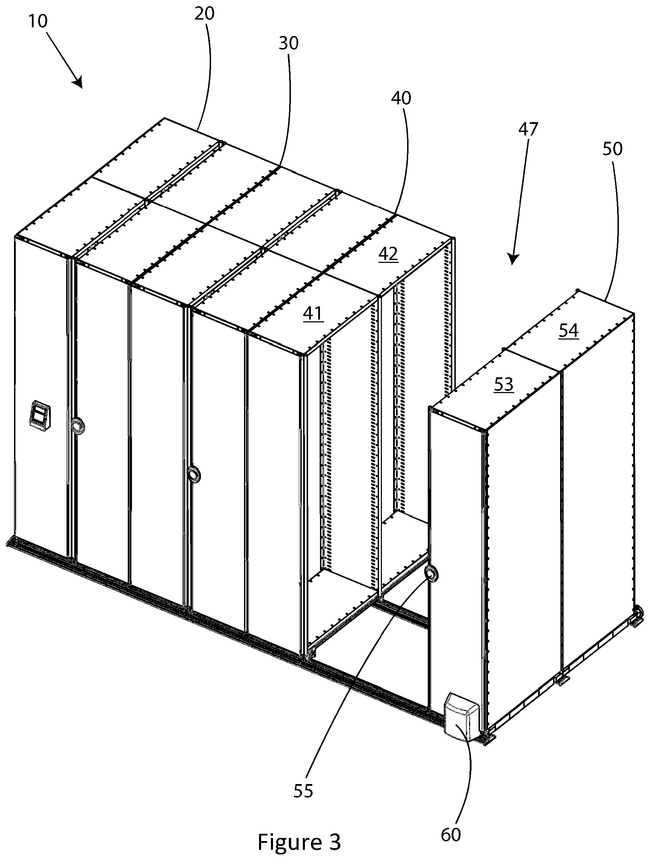

Figure 3 shows the system with a second aisle 47 open to provide access to any one of shelving bays 41, 42, 53 or 54.

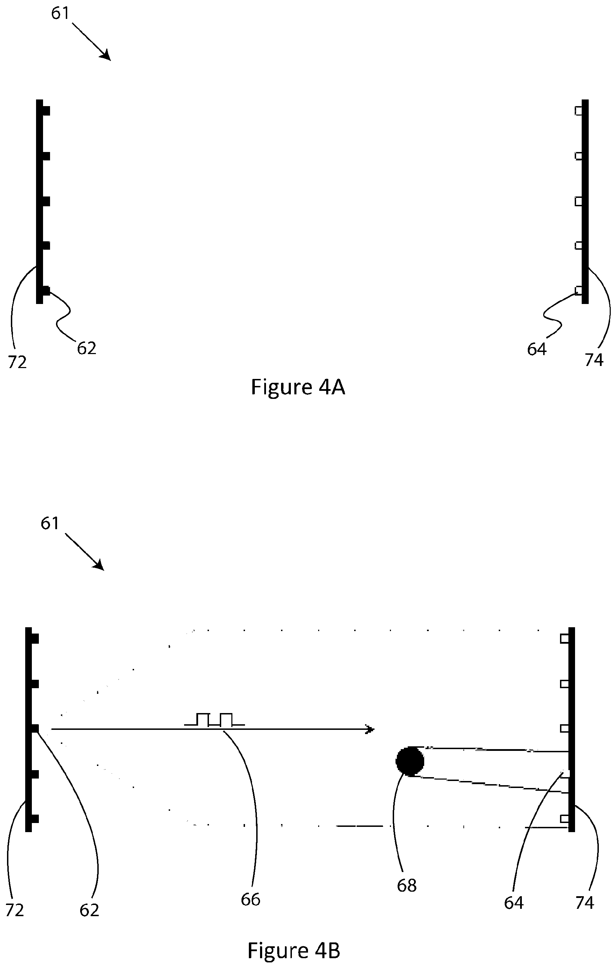

An optical curtain detector is used to detect the presence of objects within the aisles 37, 47 that may interfere with movements of the shelving bays 21, 22. Typically visible light is used; infra-red or other parts of the electromagnetic spectrum may also be used, each having their own advantages. If dealing in the infra-red, the system may also assist in the detection of heat that may be the result of a fire. However for the purposes of brevity the following discussion will be limited to LEDs emitting in the visible spectrum. Detection is achieved through a floor scanning system 61 with LED light emitters 62 and photo detectors 64, located at opposing ends of the system as illustrated in Figure 4A. The emitters and detectors are arranged orthogonally to the shelves. For convenience multiple emitters 62 and support circuitry are packaged together into emitter modules 72. Emitter modules may be daisy chained together to form a system of any desired length. Similarly multiple detectors 64 are packaged together with support circuitry into detector modules 74.

To provide clearance for the light curtain the shelving bays are elevated off of the floor. This also allows the system to be concealed under the bays. Advantageously the system operates orthogonally to the shelving bays, thus allowing a single system to scan beneath multiple shelving bays. The emitters 62 and the detectors 64 are located along the base of the outer shelving rows 20 and 50 at a separation of anywhere between a few and ten centimetres and directed inwardly towards each other. The location on the base of the outer rows and between the tracks 101 and 102 ensures that there are no existing obstructions between the emitters and detectors. Each emitter is activated in sequence and sends a coded pulse train 66 towards the opposite end of the system 10 to be received by all the corresponding detectors 64. The pulse train 66 enables discrimination between the emitter light and other ambient and/or transient light variations.

If there is an obstruction 68 within the system it prevents the pulse train from reaching at least one of the detectors as illustrated in Figure 4B. Through the separate activation of each emitter and separate monitoring of each detector a number of detection paths are created thus producing a light curtain that covers a large area whilst allowing a small break in the curtain to be detected. Each detector 64 in a detector module 74 must receive pulses from each emitter 62 in the opposing emitter module 72 for the light curtain to be considered intact.

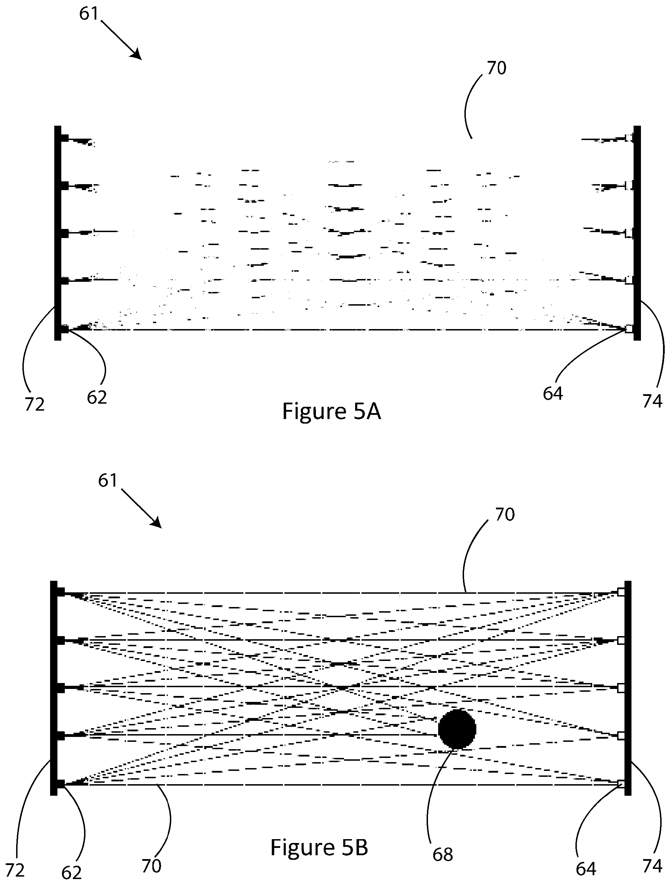

All the light paths 70 formed between a pair of opposing emitter 72 and detector 74 modules are illustrated in Figure 5A. As can be seen in this Figure, each emitter 62 in the emitter module 72 sends a light pulse 70 to each and every detector 64 in the detector module 61, the criss-crossing of these pulses 70 forms a comprehensive light curtain covering all space therebetween. In this example there are 5 emitters per emitter module and 5 detectors in the detector module. In practise 8 emitters/detectors per module are preferred to maximise efficiency of the component electronics.

As in the example of Figure 5B, when an obstruction 68 is within that the light curtain it prevents several of the beams 70 from reaching the corresponding detector 64.

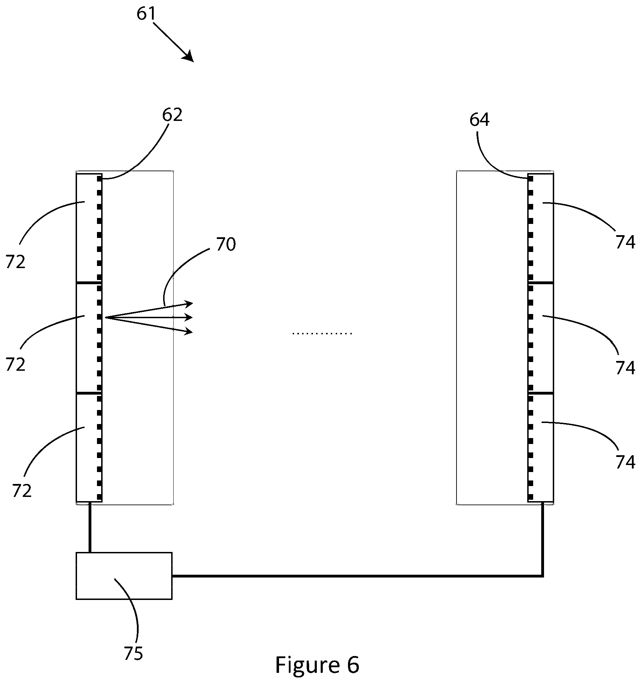

A light curtain is composed by the connection of a plurality of emitter modules 72 and a plurality of detector modules 74, each containing an equal number of emitters 62 and detectors 64 as illustrated in Figure 6. This allows for varying curtain widths according to the row width by connection of the modules. Connectors at the end of the modules provide power and control signals required for operation. A common microprocessor unit 75 controls the detection process. For extended light curtains only the light paths between opposing emitter and detector modules are monitored.

The components of an emitter module 72 preferably include a power regulation block, 8-bit shift register, AND gates and an LED buffer/driver for the LED emitter 62. At the start of the scan, the Reset signal is asserted and the Pulse signal is set 'low' to prevent any signal being output on the LEDs. A 'high' level is clocked into the shift register causing the output to be enabled. The Pulse signal is then modulated with the signature waveform and, due to the AND gate, is output only on the enabled LED. While the pulse waveform is being generated, the detector module 74 is checked for the received signature waveform to determine which detectors 64 are receiving the pulses 70.

Once the waveform is finished, a 'low' level is clocked into the shift register, causing output 1 to be disabled and output 2 to be enabled. The pulse waveform is generated again for output 2 and the detectors are checked again. Similarly, a 'low' level is closed in for the remaining 6 outputs, and the pulse and detection processes are repeated for outputs 3 to 8.

Once the block has completed scanning, if there are more modules to process the Data Out signal will propagate the 'high' level to the next module and the process continues again for another 8 outputs after the first output is enabled. A 'low' level is always clocked into the first shift register to ensure that only one 'high' level propagates through all modules. Only one LED is thus operating at any time thus avoiding any issues of cross talk.

The components of a detector module 74 preferably include a power regulation block, 8-bit shift register, phototransistor as a detector 64 and signal conditioning filters. The phototransistor receives the incident light from both the LED and other ambient light sources. In order to extract the pulse signal, the phototransistor output must be filtered and processed. This consists of an initial low-pass filter to remove ambient light levels and 50 to 120 Hz flicker (from 50 Hz and 60 Hz lighting). The result is amplified and a narrow band filter allows only those frequencies near the pulse frequency to pass. The filtered signal is multiplied with the original pulse and integrated to discriminate against non-pulse signals.

The final output is passed through a threshold detector to recover the pulse. At the start of each emitter scan the shift register is reset. At the end of the pulse train duration the Load signal is asserted to latch the inputs to the shift register. The latched data is then shifted out of the register and back to the processor 75 to determine which detectors 64 received the pulses. This is repeated for each emitter 62 in the opposing emitter block 72 to build up the scan pattern.

Once a full scan of all blocks 72, 74 has been completed, the processor 75 will have detector input results for each emitter 62, allowing the presence of an obstruction to be determined.

Therefore, a typical operating scenario for the system 10 would be that the system starts in a resting position as shown in Figure 2. A person wanting to access shelving bay 32 approaches the system and presses button 45 to initiate access. The control module 25 receives the button press and in response signals to latch module 90 to disengage from latch module 80; all other latch modules stay engaged.

The emitters 62 are then activated, sending a pulse train 66 towards the detectors 64. If there are no obstructions and all of the detectors 64 receive the pulse train 66, the drive module 60 is signalled to move to the right and in doing so moves row 50 and coupled row 40. When the drive module senses it has moved sufficiently it stops, at which stage aisle 37 has opened up and the user may access shelving bay 32. The floor scanning system is monitored and once it indicates that the aisle has been vacant for more than two minutes the drive module is signalled to move to the left to close the aisle. However, it is possible to disable this feature through the main control panel 25 if desired by the user.

In preference if there is no obstruction the system 10 will enter 'transit' mode, and the control panel 25 will emit a low 'transit' chime while the scanning systems 61 will continue to monitor the floor and trigger if an obstruction is detected. All buttons will turn red and act as emergency stop buttons if required. If any button is pressed the system will enter 'stop' mode and all buttons will flash red and an error message displayed. The user must then reset the system through the master control panel 25.

When the target aisle is fully open the control panel 25 will emit a 'ready' chime and all buttons will turn green indicating that the system is safe to enter.

If there is an obstruction and at least one of the detectors 64 fail to receive the pulse train 66, the user is alerted so that they can remove the obstruction before continuing with the sequence.

In preference once an obstruction is detected the system 10 will initiate 'obstruction mode,' when an error chime will sound, the buttons will flash and an error message will be displayed. The user would still be able to operate the system 10 at low speed by pressing and holding the relevant access button to open or close any aisle. Motor current monitoring would still prevent serious crushing or overloading when operating in obstruction mode.

The emitters 62 are in preference standard high brightness LEDs which do not require collimating, unlike laser diodes often used in light curtains. This results in light sources which are inexpensive to produce, simple to operate and have a long and reliable lifespan. The advantages of this system are that there are no moving parts to the scanning system 61 (such as scanning mirrors), nor is there the need for optical lenses which improve reliability and reduce complexity. There is not special alignment required and therefore installation is a straightforward and cost effective process.

The present invention complies with Storage Equipment Manufacturers' Association (SEMA) and Federation Europeenne De La Manutention (FEM) requirements for office furniture. All electronics comply with Consumer Electronics (CE) requirements and all relevant Australian Electromagnetic Compatibility (EMC) design and safety standards.

The reader will now appreciate the present invention which provides an electrically driven shelving system with a scanning arrangement to determine obstructions within the system.

Further advantages and improvements may very well be made to the present invention without deviating from its scope, as defined in the appended claims. Although the invention has been shown and described in what is conceived to be the most practical and preferred embodiment, it is recognized that departures may be made therefrom within the scope of the invention, according to the appended claims. Any discussion of the prior art throughout the specification should in no way be considered as an admission that such prior art is widely known or forms part of the common general knowledge in this field.

In the present specification and claims (if any), the word "comprising" and its derivatives including "comprises" and "comprise" include each of the stated integers but does not exclude the inclusion of one or more further integers.

## Claims

1. A mobile shelving system having a scanning arrangement (61), the system comprising:
(a) a plurality of emitters (62) configured to emit an electromagnetic signal;
(b) a plurality of detectors (64) configured to receive the electromagnetic signal;
(c) a plurality of shelving rows including a first outer shelving row (20), one or more movable shelving rows (30), a second outer shelving row (50), the one or more movable shelving rows being placed between said first outer shelving row and said second outer shelving row and movable along a direction connecting said first and outer shelving row and said second outer shelving row;
(d) a microprocessor (75);
(e) a control module (25);
wherein,
each shelving row of the mobile shelving system includes shelving bays elevated off of the ground;
one of the first and second outer shelving rows is movable and comprises a drive module (60) configured to provide mobile force to the one shelving row (50);
the first outer shelving row and the second outer shelving row additionally include a base located under respective shelving bays;
the emitters (62) are grouped together in emitter modules (72) and detectors are grouped together in opposing detector modules (74), each of the emitter and the detector modules being located at a respective opposing end of the system, along the base of the outer shelving rows;
every emitter in an emitter module is configured to send a signal to every detector in an opposing detector module thus forming a detection curtain;
and
each emitter (62) in an emitter module (72) is configured to be operated in sequence; whereby, the emitted electromagnetic signal is modulated to allow the signal to be distinguished from ambient signals, each detector (64) in an opposing detector module (74) is configured to be monitored for the reception of the modulated electromagnetic signal, and wherein the microprocessor is configured to detect an obstruction through an interruption of said modulated electromagnetic signal if any one of the detectors (64) in the opposing detector module (74) does not receive a signal from each of the emitters (62) in the emitter module (72), and wherein the control module is configured to halt the movement of the system if an obstruction is detected, and until the obstruction is removed.

2. A scanning arrangement as in any one of the preceding claims wherein the emitters (62) and detectors (64) are arranged orthogonally to the shelves of the mobile shelving system.

3. A scanning arrangement as in any one of the preceding claims wherein the electromagnetic signals are infrared signals.

4. A scanning arrangement as in any one of the preceding claims wherein the electromagnetic signals are visible light signals.

## Patentansprüche

1. Bewegliches Regalsystem mit einer Abtastvorrichtung (61), das System Folgendes umfassend:
(a) eine Vielzahl von Emittern (62), die konfiguriert sind, um ein elektromagnetisches Signal zu emittieren;
(b) eine Vielzahl von Detektoren (64), die konfiguriert sind, um das elektromagnetische Signal zu empfangen;
(c) eine Vielzahl von Regalreihen, einschließlich einer ersten äußeren Regalreihe (20), einer oder mehrerer beweglicher Regalreihen (30), einer zweiten äußeren Regalreihe (50), wobei die eine oder mehreren beweglichen Regalreihen zwischen der ersten äußeren Regalreihe und der zweiten äußeren Regalreihe platziert sind und entlang einer Richtung beweglich sind, die die erste und äußere Regalreihe und die zweite äußere Regalreihe verbindet;
(d) einen Mikroprozessor (75);
(e) ein Steuermodul (25);
wobei
jede Regalreihe des beweglichen Regalsystems vom Boden abgehobene Regalbuchten einschließt;
eine von der ersten und der zweiten äußeren Regalreihe beweglich ist und ein Antriebsmodul (60) umfasst, das konfiguriert ist, um eine bewegliche Kraft auf die eine Regalreihe (50) bereitzustellen;
die erste äußere Regalreihe und die zweite äußere Regalreihe zusätzlich eine Basis einschließen, die sich unter jeweiligen Regalbuchten befindet;
die Emitter (62) in Emittermodulen (72) zusammengefasst sind und Detektoren in gegenüberliegenden Detektormodulen (74) zusammengefasst sind, wobei sich jeder von dem Emitter und den Detektormodulen an einem jeweiligen gegenüberliegenden Ende des Systems entlang der Basis der äußeren Regalreihen befindet;
jeder Emitter in einem Emittermodul konfiguriert ist, um ein Signal an jeden Detektor in einem gegenüberliegenden Detektormodul zu senden, wodurch ein Detektionsvorhang gebildet wird;
und jeder Emitter (62) in einem Emittermodul (72) dazu konfiguriert ist, nacheinander betrieben zu werden; wobei das emittierte elektromagnetische Signal moduliert wird, um zu ermöglichen, dass das Signal von Umgebungssignalen unterschieden wird; jeder Detektor (64) in einem gegenüberliegenden Detektormodul (74) konfiguriert ist, um auf den Empfang des modulierten elektromagnetischen Signals überwacht zu werden, und wobei der Mikroprozessor konfiguriert ist, um ein Hindernis durch eine Unterbrechung des modulierten elektromagnetischen Signals zu erkennen, falls einer der Detektoren (64) in dem gegenüberliegenden Detektormodul (74) kein Signal von jedem der Emitter (62) in dem Emittermodul (72) empfängt, und wobei das Steuermodul konfiguriert ist, um die Bewegung des Systems anzuhalten, wenn ein Hindernis erkannt wird, und bis das Hindernis beseitigt ist.

2. Abtastvorrichtung nach einem der vorhergehenden Ansprüche, wobei die Emitter (62) und Detektoren (64) orthogonal zu den Regalen des beweglichen Regalsystems angeordnet sind.

3. Abtastvorrichtung nach einem der vorhergehenden Ansprüche, wobei die elektromagnetischen Signale Infrarotsignale sind.

4. Abtastvorrichtung nach einem der vorhergehenden Ansprüche, wobei die elektromagnetischen Signale Signale sichtbaren Lichts sind.

## Revendications

1. Système de rayonnage mobile comportant un dispositif de balayage (61), le système comprenant :
(a) une pluralité d'émetteurs (62) configurés pour émettre un signal électromagnétique ;
(b) une pluralité de détecteurs (64) configurés pour recevoir le signal électromagnétique ;
(c) une pluralité de rangées de rayonnage comprenant une première rangée de rayonnage externe (20), une ou plusieurs rangées de rayonnage mobiles (30), une seconde rangée de rayonnage externe (50), la ou les rangées de rayonnage mobiles étant placées entre ladite première rangée de rayonnage externe et ladite seconde rangée de rayonnage externe et mobiles le long d'une direction reliant ladite rangée de rayonnage première et externe et ladite seconde rangée de rayonnage externe ;
(d) un microprocesseur (75) ;
(e) un module de commande (25) ;
chaque rangée de rayonnage du système de rayonnage mobile comprenant des travées de rayonnage surélevées par rapport au sol ;
l'une des première et seconde rangées de rayonnages externes étant mobile et comprenant un module d'entraînement (60) configuré pour fournir une force mobile à la rangée de rayonnage (50) ;
ladite première rangée de rayonnage externe et ladite seconde rangée de rayonnage externe comprenant en outre une base située sous les travées de rayonnage respectives ;
lesdits émetteurs (62) étant regroupés en modules émetteurs (72) et lesdits détecteurs étant regroupés en modules détecteurs opposés (74), chacun des modules émetteurs et détecteurs étant situé au niveau d'une extrémité opposée respective du système, le long de la base des rangées de rayonnage externes ;
chaque émetteur dans un module émetteur étant configuré pour envoyer un signal à chaque détecteur dans un module détecteur opposé, formant ainsi un rideau de détection ;
et chaque émetteur (62) dans un module émetteur (72) étant configuré pour fonctionner en séquence ; moyennant quoi, le signal électromagnétique émis est modulé pour permettre au signal d'être distingué des signaux ambiants ; chaque détecteur (64) dans un module détecteur opposé (74) est configuré pour être surveillé en vue de la réception du signal électromagnétique modulé, et ledit microprocesseur étant configuré pour détecter une obstruction par une interruption dudit signal électromagnétique modulé si l'un quelconque des détecteurs (64) dans le module détecteur opposé (74) ne reçoit pas de signal en provenance de chacun des émetteurs (62) dans le module émetteur (72), et ledit module de commande étant configuré pour arrêter le mouvement du système si une obstruction est détectée, et jusqu'à ce que l'obstruction soit retirée.

2. Dispositif de balayage selon l'une quelconque des revendications précédentes, lesdits émetteurs (62) et lesdits détecteurs (64) étant agencés orthogonalement aux étagères du système de rayonnage mobile.

3. Dispositif de balayage selon l'une quelconque des revendications précédentes, lesdits signaux électromagnétiques étant des signaux infrarouges.

4. Dispositif de balayage selon l'une quelconque des revendications précédentes, lesdits signaux électromagnétiques étant des signaux de lumière visible.
